# FASCICULE DE BREVET EUROPEEN

(11) **EP 1 130 229 B1**
(45) Date de publication et mention de la délivrance du brevet: **23.03.2005**
(21) Numéro de dépôt: 01400144.0
(22) Date de dépôt: 18.01.2001
(51) Int. Cl.: F01N 3/023, F02D 41/40

(54) **Système d'aide à la régénération d'un filtre à particules intégré dans une ligne d'échappement d'un moteur Diesel de véhicule automobile**
Vorrichtung zur Regenerierung eines Partikelfilters in einer selbstgezündeten Brennkraftmaschine
System to regenerate an exhaust particle filter in a diesel engine

(30) Priorité: 20.01.2000 FR 0000703
(43) Date de publication de la demande: 05.09.2001
(73) Titulaire: Peugeot Citroen Automobiles SA, 92200 Neuilly sur Seine (FR)
(72) Inventeur: Le Tallec, Patrice, 78500 Sartrouville (FR); Salvat, Olivier, 75010 Paris (FR)
(74) Mandataire: Habasque, Etienne Joel Jean-François

(56) Documents cités:
- EP-A- 0 411 445
- DE-A- 19 746 855
- FR-A- 2 774 427
- US-A- 4 685 290
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- DIRECTION DE LA COMMUNICATION: "Particule Filter System" PEUGEOT PRESS RELEASE, [en ligne] 15 avril 1999 (1999-04-15), XP002148817 Extrait de l'Internet: <URL:www.psa.fr/presse/en_99018.html> [extrait le 2000-09-28]

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle comprennent des moyens de détermination de la charge en particules du filtre raccordés à un capteur de pression différentielle disposé aux bornes du filtre à particules et adapté pour délivrer une information représentative de la charge globale du filtre, des moyens d'estimation de la charge du filtre en résidus autres que ces particules, et des moyens de calcul de la charge du filtre particules à partir de la charge globale et de la charge en résidus autres.

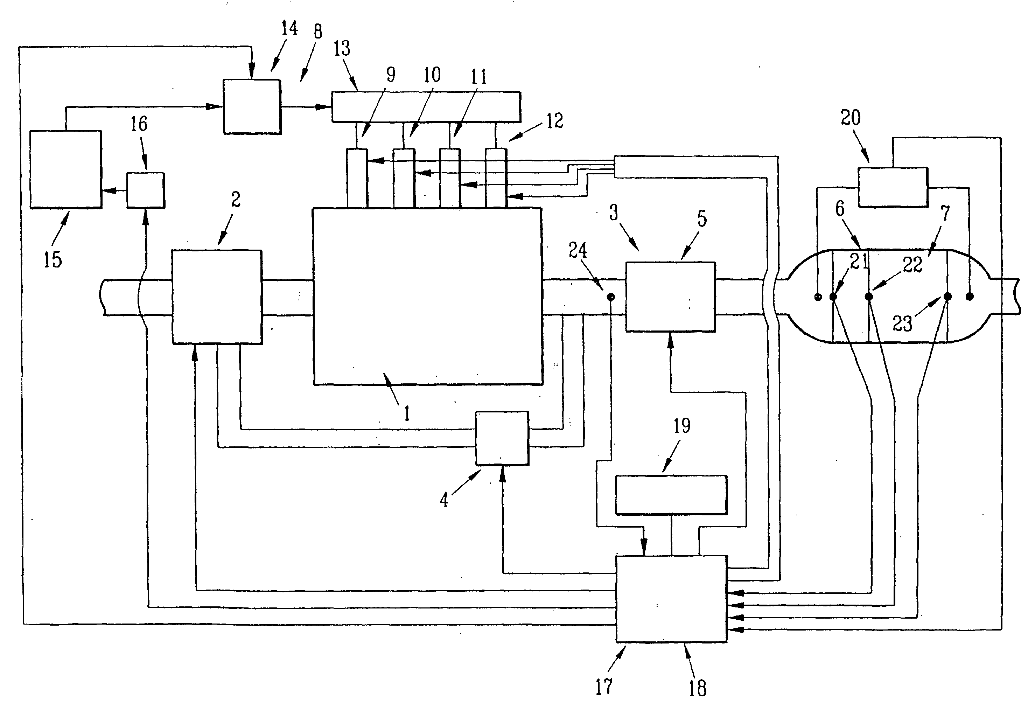

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci ;

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 comprennent des moyens de détermination de la charge en particules du filtre 7.

Ces moyens de détermination sont formés par le calculateur 18 relié au capteur de pression différentielle 20 disposé aux bornes du filtre à particules 7. Celui-ci délivre en effet une information représentative de la charge globale du filtre, la pression différentielle aux bornes du filtre étant fonction de sa charge.

Les moyens de contrôle 17 comprennent également des moyens d'estimation de la charge du filtre en résidus autres que les particules, qui comprennent par exemple des moyens de cumul des dépôts de résidus sur le filtre. Ces moyens sont également formés par le calculateur 18.

Ces résidus autres peuvent comporter par exemple des cendres, de l'huile, l'additif ajouté au carburant, etc.. Cette charge en résidus autres peut être estimée et cumulée au cours du fonctionnement du moteur du véhicule, par le calculateur 18, pour obtenir en continu ou de façon périodique, une estimation de la charge.

A partir de ces informations de charge globale du filtre à particules 7 délivrée par le capteur de pression différentielle 20 et de charge en résidus autres que les particules estimée par le calculateur 18, les moyens de contrôle 17 et plus particulièrement le calculateur 18 sont alors adaptés pour calculer la charge en particules du filtre à un moment donné, ce qui permet d'optimiser le déclenchement de la régénération de ce filtre, pour soustraction de la charge en résidus de la charge globale.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour pivoter le fonctionnement du moteur, ces moyens étant en outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** les moyens de contrôle (17) comprennent des moyens (18) de détermination de la charge en particules du filtre raccordés à un capteur de pression différentielle (20) disposé aux bornes du filtre à particules (7) et adapté pour délivrer une information représentative de la charge globale du filtre, des moyens (18) d'estimation de la charge du filtre en résidus autres que ces particules, et des moyens (18) de calcul de la charge du filtre particules à partir de la charge globale et de la charge en résidus autres.

## Claims

1. System of assisting the regeneration of a particle filter integrated into an exhaust pipe of an engine of a diesel motor vehicle comprising various elements connected to the engine, including:
• means (2) for the intake of air into the engine;
• means (4) for recycling exhaust gas of the engine as inlet therein;
• a turbo-compressor (5);
• an oxidation catalyst (6) disposed upstream of the particle filter (7) in the exhaust pipe;
• a joint feed system (8) for fuel to the cylinders of the engine, comprising electrically controlled injectors (9, 10, 11, 12) connected to these cylinders;
• means (16) for adding an additive to the fuel to be deposited in the particle filter (7) to lower the combustion temperature of the particles trapped therein;
• means (20, 21, 22, 23, 24) for acquiring data relating to various operating parameters of the engine and elements connected thereto,
**characterised in that** it comprises means (17) for controlling the operation of the intake means (2), the recycling means (4), the turbo-compressor (5) and/or the feed system (8) to control the operation of the engine, these means being additionally adjusted to actuate a regeneration phase of the particle filter (7) by combustion of the particles trapped therein by actuating a phase of multiple injections of fuel in the cylinder of the engine during their relief phase, and **in that** the control means (17) comprise means (18) to determine the particle load of the filter connected to a differential pressure sensor (20) disposed at the terminals of the particle filter (7) and arranged to provide information representing the total load of the filter, means (18) for estimating the load of the filter through residues other than these particles, and means (18) for calculating the load of the particle filter from the total load and the load of other residues.

## Patentansprüche

1. System zur Unterstützung der Regeneration eines Partikelfilters, das in einem Strang einer Auspuffanlage eines Dieselmotors eines Kraftfahrzeugs integriert ist, aufweisend verschiedene Organe, die mit dem Motor verbunden sind, u. a.:
- Mittel (2) zum Einlassen von Luft in den Motor,
- Mittel (4) zum Rückfuhren von Auspuffgas des Motors in dessen Einlass,
- einen Turbokompressor (5),
- einen Oxidationskatalysator (6), der stromaufwärts des Partikelfilters (7) im Strang der Auspuffanlage angeordnet ist;
- ein System (8) zur gemeinsamen Versorgung der Zylinder des Motors mit Kraftstoff, aufweisend Einspritzdüsen (9, 10, 11, 12) mit elektrischer Steuerung, die mit diesen Zylindern verbunden sind,
- Mittel (16) zur Zugabe eines Additiv zu dem Kraftstoff, welches Additiv dazu bestimmt ist, sich auf dem Partikelfilter (7) abzulagern, um die Verbrennungstemperatur der in diesem Letztgenannten gefangenen Partikel abzusenken,
- Mittel (20, 21, 22, 23, 24) zum Erfassen von Informationen bezüglich verschiedener Funktionsparameter des Motors und der mit diesem Letztgenannten verbundenen Organe,
**dadurch gekennzeichnet, dass** es Mittel (17) zur Kontrolle der Funktionsweise der Finlass-Mittel (2), der Rückführ-Mittel (4), des Turbokompressors (5) und/oder des Versorgungssystems (8) aufweist, um die Funktionsweise des Motors zu regeln, wobei diese Mittel außerdem angepasst sind, um eine Regenerationsphase des Partikelfilters (7) auszulösen durch Verbrennen der in diesem Letztgenannten gefangenen Partikel, indem eine Phase mehrfacher Kraftstoffeinspritzungen in den Zylindern des Motors während ihrer Volumenänderungsphase eingeschaltet wird, und dass die Kontrollmittel (17) Mittel (18) zur Bestimmung der Belastung des Filters mit Partikeln aufweisen, die an einen Wirkdruckgeber (20) angeschlossen sind, der an den Anschlussklemmen des Partikelfilters (7) angeordnet und angepasst ist, um eine Information bereitzustellen, die für die globale Belastung des Filters repräsentativ ist, Mittel (18) zur Bewertung der Belastung des Filters mit anderen Rückständen als diesen Partikeln und Mittel (18) zum Berechnen der Belastung des Partikelfilters ausgehend von der globalen Belastung und der Belastung mit sonstigen Rückständen.
